# EUROPÄISCHE PATENTSCHRIFT

(11) **EP 1 720 768 B1**
(45) Veröffentlichungstag und Bekanntmachung des Hinweises auf die Patenterteilung: **15.07.2009**
(21) Anmeldenummer: 05701337.7
(22) Anmeldetag: 04.02.2005
(51) Int. Cl.: B64F 5/00

(54) **DOCKEINHEIT ZUM DURCHFÜHREN VON ARBEITEN AN EINEM FLUGZEUG**
DOCK UNIT FOR CARRYING OUT WORK ON AN AIRCRAFT
ENSEMBLE DOCK PERMETTANT L'EXECUTION DE TRAVAUX SUR UN AVION

(30) Priorität: 03.03.2004 DE 102004010973
(43) Veröffentlichungstag der Anmeldung: 15.11.2006
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: PCT/EP2005/001104
(87) Internationale Veröffentlichungsnummer: WO 2005/085068

(56) Entgegenhaltungen:
- DE-A1- 10 201 202
- US-A- 5 423 396

## Beschreibung

Die Erfindung betrifft eine Dockeinheit zum Durchführen von Arbeiten an einem Flugzeug gemäß dem Oberbegriff des Anspruches 1.

Eine derartige Dockeinheit ist in der DE 102 01 202 A1 beschrieben. Sie ermöglicht es, ein langes, sich über im Wesentlichen die gesamte Länge des Flugzeugrumpfes erstreckendes horizontales Tragteil über eine Mehrzahl von Stützteilen auf einer Aufstellfläche abzustützen, trotzdem aber das Flugzeug ein- und auszudocken, ohne dass die zu seinen beiden Seiten aufgestellten Dockeinheiten um eine größere Strecke transversal zur Flugzeugachse verfahren werden müssen. Dies ist im Hinblick darauf vorteilhaft, durch derartige Dockeinheiten gebildete Docks im Wesentlichen bis an die Außenwände von Hallen zu stellen. Hat man mehrere derartige Dockeinheiten in einer gemeinsamen Halle, so benötigen diese wenig Platz und interferieren trotzdem nicht mit benachbarten Docks, wenn ein Flugzeug ein- oder ausgedockt wird.

Bei der bekannten Dockeinheit wird das Flugzeug immer mit der Nase voraus eingedockt. Das Höhenleitwerk des Flugzeuges liegt vor dem vorderen Ende der Dockeinheit, ist also nicht eingedockt. Für Arbeiten am Höhenleitwerk und am Seitenleitwerk werden fahrbare Türme eingesetzt, die an diese Leitwerke herangefahren werden und zum Ein- und Ausdocken des Flugzeuges seitlich weggestellt werden.

Für manche Arbeiten an einem Flugzeug wäre es vorteilhaft, wenn man das Flugzeug auch mit den Leitwerken nach vorne eindocken könnte.

Hierzu schafft die vorliegende Erfindung eine Dockeinheit mit dem im Anspruch 1 angegebenen Merkmalen.

Bei der erfindungsgemäßen Dockeinheit ist das horizontale Tragteil des Dockteils so weit hochgesetzt, dass das Höhenleitwerk eines zu wartenden Flugzeuges unter seiner Unterseite hindurchbewegt werden kann.

Zum Ein- und Ausdocken werden die beweglichen Stützteile des Dockteils jeweils so hochgezogen, wie dies zum Passierenlassen der Tragflächen und der Höhenleitwerke notwendig ist. Jeweils nach Durchtreten der Tragfläche bzw. des Höhenleitwerkes wird ein Stützteil wieder ausgefahren und übernimmt wieder seine Stützfunktion. Man hat somit für die Tragfläche und für das Höhenleitwerk sich kurzfristig öffnende Durchgänge bei den Stützteilen.

Die Erfindung ermöglicht eine sichere feste Abstützung der Dockeinheit bei ihrem bezogen auf ein Hallentor innenliegenden zweiten Ende. Die nach außen versetzen Stützteile beim zweiten, inneren Ende der Dockeinheit können somit besonders groß und robust ausgebildet werden. Dies ist im Hinblick auf das Herantragen sperriger Gegenstände, aber auch im Hinblick auf großzügig bemessene Fluchtwege von Vorteil.

Das Beabstanden der feststehenden weiteren Stützteile vom horizontalen Tragteil in transversaler Auswärtsrichtung ist auch im Hinblick darauf von Vorteil, eine Abstützung der Dockeinheit auf der Aufstellfläche innerhalb eines Dreieckes mit größerer Basis zu erhalten. Auf diese Weise können Kippmomente, die auf die Dockeinheit einwirken, besser aufgenommen werden.

Vorteilhafte Weiterbildungen der Erfindungen sind in Unteransprüchen angegeben.

Bei einer Dockeinheit gemäß Anspruch 2 ist es möglich, ein im Dock befindliches Flugzeug zur Entlastung und Wartung der Fahrgestelle aufzubocken, ohne dass das Höhenleitwerk aus dem Dock herausgefahren werden muss.

Bei einer Dockeinheit gemäß Anspruch 3 hat man bei einer Stütze auch eine direkte Verbindung zur Aufstellfläche des Flugzeuges. Arbeitspersonal kann somit ohne große Wege von der jeweiligen Arbeitsstelle zur Aufstellfläche gelangen, um Teile zu besorgen usw.

Da das weitere Stützteil nicht beweglich ist und daher sehr robust und auch groß gebaut werden kann, eignet es sich besonders zum Einbau eines großzügig bemessenen Treppenhauses, wie im Anspruch 4 angegeben.

Gemäß Anspruch 5 kann man bei dem weiteren Stützteil auch einen Aufzug vorsehen, um Lasten auf die Höhe der Arbeitsböden zu bringen.

Die Weiterbildung der Erfindung gemäß Anspruch 6 ist im Hinblick auf eine nochmals raschere Evakuierung der Dockeinheit in Notfällen von Vorteil.

Bei einer Dockeinheit gemäß Anspruch 7 kann man auf den Verkehrsflächen der Dockeinheit über die gesamte Länge des Flugzeugrumpfes gehen.

Die Weiterbildung der Erfindung gemäß Anspruch 8 eignet sich besonders für Dockeinheiten für Flugzeuge mit sehr langem Rumpf. Man hat hier die feststehenden stabilen und großzügig dimensionierten, gegebenenfalls als Fluchtwege ausgebauten Stützteile vom inneren Ende der Dockeinheit etwas nach innen versetzt, was im Hinblick auf die stabile Abstützung des langen horizontalen Tragteiles und auch im Hinblick darauf von Vorteil ist, die großzügig bemessenen Fluchtwege etwas in Richtung auf die Mitte der Dockeinheit zu rücken.

Die Weiterbildung der Erfindung gemäß Anspruch 9 ist im Hinblick auf eine gute und sichere Abstützung des innersten Abschnittes der Dockeinheit und auf das Vorsehen zusätzlicher Zugangs- und Fluchtwege von Vorteil.

Das Vorsehen zweier oder mehrerer vertikal beabstandeter Verkehrsflächen gemäß Anspruch 10 hat den Vorteil, dass sich das Arbeitspersonal in unterschiedlicher Höhe längs des Flugzeugrumpfes bewegen kann. Dies ist im Hinblick auf ein rasches und sicheres Erreichen unterschiedlicher Einsatzorte von Vorteil.

Eine Dockeinheit gemäß Anspruch 11 hat bei hoher mechanischer Festigkeit niederes Gewicht.

Auch die Weiterbildung der Erfindung gemäß Anspruch 12 ist im Hinblick darauf von Vorteil, mit einer größeren Anzahl von Personen an unterschiedlichen Abschnitten des Flugzeuges Arbeiten gleichzeitig durchzuführen.

Die Weiterbildung der Erfindung gemäß Anspruch 13 ermöglicht einen gleichermaßen guten Übergang von den verschiedenen Arbeitsböden zu den Verkehrsflächen des horizontalen Tragteiles.

Dockeinheiten der hier betrachteten Art sind teuer und benötigen viel Platz in den großen Hallen. Es ist daher auf den meisten Flughäfen nicht möglich, für die verschiedenen Flugzeugtypen speziell angepasste Dockeinheiten vorzuhalten. Für Fälle, in denen sowohl das Höhenleitwerk als auch die Tragfläche mit eingedockt werden soll, könnte es vorkommen, dass das Raster, in welchem die verfahrbaren Stützteile angeordnet sind, nicht mit dem Abstand zwischen Tragfläche und Höhenleitwerk in Flugzeuglängsrichtung übereinstimmt. Für derartige Fälle ist es bei einer Dockeinheit gemäß Ansprüch 14 möglich, zumindest eines der Stützteile auch in horizontaler Richtung zu verfahren und so unterschiedlichen Abständen zwischen Tragfläche und Höhenleitwerk Rechnung zu tragen.

Die Weiterbildung der Erfindung gemäß Anspruch 15 ermöglicht es, die Dockeinheit näher auf den Rumpf eines schon eingedockten Flugzeuges zuzufahren oder von diesem wegzufahren. Dies erleichtert das Ein- und Ausdocken und vermeidet Beschädigungen der Außenhaut des Flugzeuges, welches sich sonst beim Eindocken zwischen zwei eng benachbarte Dockeinheit ergeben würden.

Dabei erlaubt die Weiterbildung der Erfindung gemäß Anspruch 16 ein besonders präzises und gefahrloses verfahren der Dockeinheiten.

Kombiniert man eine Dockeinheit gemäß Anspruch 17 mit einer hierzu spiegelbildlichen und spiegelbildlich angeordneten zweiten Dockeinheit, so kann man gleichzeitig an beiden Seiten eines Flugzeuges Arbeiten durchführen.

Nachstehend wird die Erfindung anhand von Ausführungsbeispielen unter Bezugnahme auf die Zeichnung näher erläutert. In dieser zeigen:
- Figur 1:: eine Aufsicht auf ein Flugzeug-Wartungsdock mit einem in diesem eingedockten Flugzeug;
- Figuren 2 bis 10:: seitliche Ansichten des Docks in verschiedenen Phasen des Eindockens eines Flugzeuges;
- Figur 11:: eine Ansicht des Docks gesehen vom Bug zum Heck des eingedockten Flugzeuges;
- Figur 12:: eine Aufsicht auf die Innenseite eines von zwei Dockteilen, welche das Dock nach den Figuren 1 bis 11 bilden;
- Figur 13:: eine ähnliche Ansicht wie Figur 1, in welcher hier doch ein abgewandeltes Dock zur Durchfüh- rung an Arbeiten an längeren Flugzeugen gezeigt ist und;
- Figur 14:: eine ähnliche Ansicht wie Figur 1, in welcher jedoch ein abgewandeltes Flugzeugdock zur Wartung längerer Flugzeuge gezeigt ist und das Flugzeug mit der Nase voraus eingedockt ist.

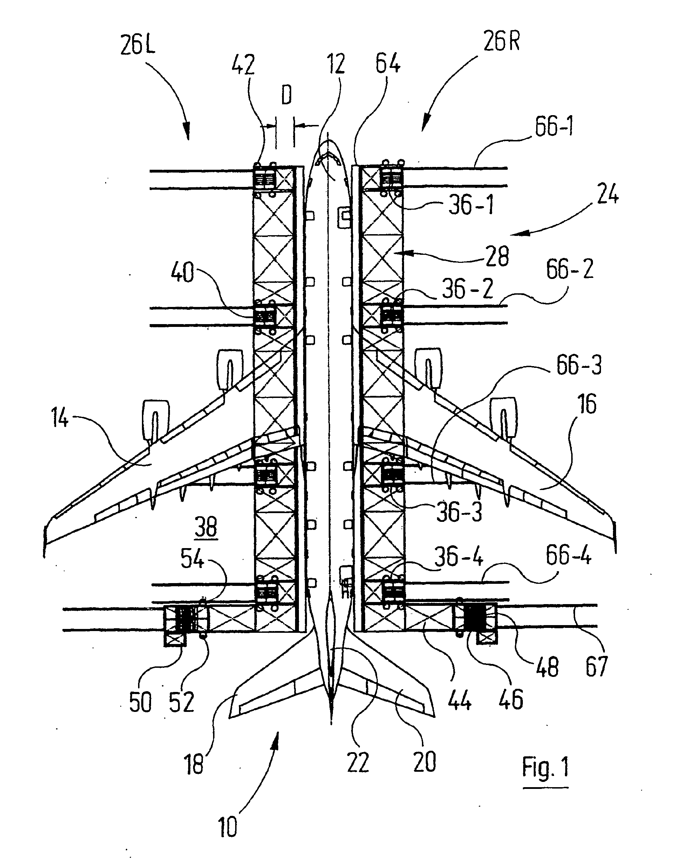

In Figur 1 ist mit 10 insgesamt ein großes vierstrahliges Passagierflugzeug dargestellt, welches einen im Wesentlichen zylindrischen Rumpf 12, zwei Tragflächen 14, 16 sowie zwei Höhenruder 18, 20 und ein Seitenruder 22 aufweist.

Das Flugzeug 10 ist in einem insgesamt mit 24 bezeichneten Dock eingedockt, welches zwei spiegelbildlich ausgebildete Dockeinheiten 26L, 26R aufweist, die zu beiden Seiten des Flugzeuges 10 spiegelbildlich angeordnet sind.

Die Dockeinheiten 26L, 26R werden nachstehend unter Bezugnahme auf die Zeichnung näher erläutert, wobei in Fällen, wo es auf eine Unterscheidung dieser beiden Dockeinheiten nicht ankommt, einfach von einer Dockeinheit 26 gesprochen wird.

Wie aus den Figuren ersichtlich, umfassen die Dockeinheiten 26 jeweils ein horizontales Tragteil 28, welches sich längs des Rumpfes 12 erstreckt. Das Tragteil 28 ist als Fachwerkkonstruktion ausgeführt und hat drei Trägerebenen, die zusammen mit einer nicht näher gezeigten Beplankung Verkehrsflächen 30, 32, 34 vorgeben, auf welchen sich Personal bewegen kann.

Das Tragteil 28 ist jeweils über vier in Längsrichtung verteilte Stützteile 36-1, 36-2, 36-3 und 36-4 auf einer Aufstellfläche 38 aufgestellt. Die Stützteile 36 sind als quadratischen Querschnitt aufweisende Fachwerk-Säulen ausgebildet, in deren Inneren jeweils ein Treppenhaus 40 vorgesehen ist. Dieses Treppenhaus 40 ermöglicht es dem Arbeitspersonal, sich zwischen der Aufstellfläche 38 und den Verkehrswegen 30, 32, 34 zu bewegen.

Die Stützteile 36 sind als vertikal verfahrbare Teile ausgebildet, wozu sie bei ihren vier Ecken mit vier langen Zaunstangen versehen sein können (in der Zeichnung nicht ersichtlich), die mit Ritzeln von vier benachbarten Antriebseinheiten 42 zusammenarbeiten, welche von dem Tragteil 28 getragen sind.

Auf diese Weise lässt sich jedes der Stützteile 36 aus einer auf der Aufstellfläche 38 stehenden Arbeitsstellung in eine Passierstellung anheben, in welcher die Unterseite des Stützteiles 36 mit der Unterseite des Tragteiles 28 fluchtet.

Wie aus der Zeichnung ersichtlich, liegt die Unterseite des Tragteiles 28 deutlich höher als die Oberseite der Höhenruder 18, 20. Auf diese Weise können die Höhenruder 18, 20 unter Stützteilen 36 hindurchgefahren werden, wenn diese die oben angesprochene voll angehobene Stellung einnehmen.

Wie aus Figur 1 ersichtlich, haben die Stützteile 36 eine im Wesentlichen quadratischen Querschnitt, wobei die Kantenlänge des Quadrates der halben Tiefe (Abmessung in transversaler Richtung) des Tragteiles 28 entspricht. Die Stützteile 36 sind auch bei der Außenseite des Tragteiles 28 angeordnet, so dass zwischen der Innenseite eines Stützteiles 36 und der dem Flugzeugrumpf zugewandten Innenseite der Dockeinheit 26 ein Durchgang D verbleibt, der im Wesentlichen gleiche Größe aufweist wie der Querschnitt des Stützteiles 36. Man hat also auf der zum Flugzeugrumpf weisenden Innenseite der Dockeinheit 26 eine durchgehende Verkehrsfläche. Typischerweise beträgt der Querschnitt des Stützteiles 36 etwa 3x3 Meter, so dass auf der Innenseite des Stützteiles auch ein drei Meter breiter Durchgang D zwischen Stützteil und Flugzeugrumpf verbleibt.

Bei dem in Figur 1 gezeigten Dock ist die Größe des Abstandes zwischen den Stützteilen 36-1, 36-2, 36-3 und 36-4 zweieinhalb, drei und zweieinhalb Fachwerkfelder.

An das Fachwerkfeld, in welchem das Stützteil 36-4 angeordnet ist, schließt sich ein transversales Verbindungsteil 44 an, dessen Unterseite ebenso wie die Unterseite des Tragteils 28 deutlich über den Höhenrudern 18, 20 liegt. Die transversale Abmessung des Verbindungsteiles 44 ist so groß, dass die äußeren Spitzen der Höhenruder 18, 20 unter ihm passieren können.

Das außenliegende Ende des Verbindungsteiles 44 ist von einem weiteren Stützteil 46 getragen, welches deutlich größeren Querschnitt aufweist als die Stützteile 36. Die Stützteile 46 nehmen ein großes Treppenhaus 48 auf, über welches ein rasches Evakuieren der Dockeinheit aber auch ein Hinein- oder Heraustragen größerer Objekte möglich ist.

Wie aus Figur 1 ersichtlich, sind die Stützteile 46 jeweils mit einem Aufzug 50 versehen und haben auf ihrer vorderen und hinteren Begrenzungsseite jeweils ein Fluchtrohr 52, 54, durch welches Personal bei Notfällen rasch die Dockeinheit verlassen kann.

Das Verbindungsteil 44 hat eine Verkehrsfläche 56, die zu der Verkehrsfläche 30 des Tragteiles 28 führt.

Die innenliegenden Seiten der Tragteile 28 tragen jeweils eine Mehrzahl von Bühneneinheiten 58, die in vertikaler Richtung verstellbar sind, wie durch einen Pfeil 60 angedeutet. Jede der Bühneneinheit 58 trägt zwei Arbeitsböden 62, 64, die um eine Strecke übereinander angeordnet sind, welche dem Abstand von Zwischenpodesten der Treppenhäuser 40 entsprechen. Auf diese Weise ist ein leichter Übergang zwischen den Arbeitsböden 62, 64 und den Treppenhäusern 40 gewährleistet.

Das in den Figuren gezeigte Dock ist so in einer Wartungshalle angeordnet, dass die Stützteile 36-1 einem großen Tor benachbart sind, durch welches die Flugzeuge in die Halle gebracht bzw. aus dieser herausbewegt werden, während die Stützteile 46 einer geschlossenen Hallenwand oder einem dahinter liegenden Wartungsplatz benachbart sind.

Um die in Figur 1 gezeigte Situation zu erzielen, muss somit das Flugzeug mit den Leitwerken voraus in das Dock hineinbewegt werden.

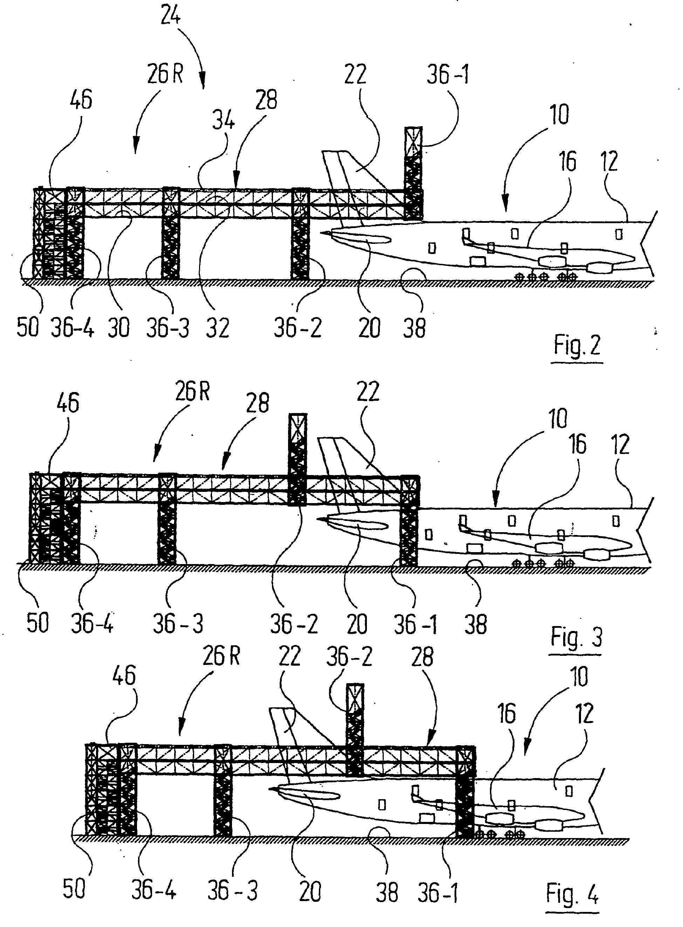

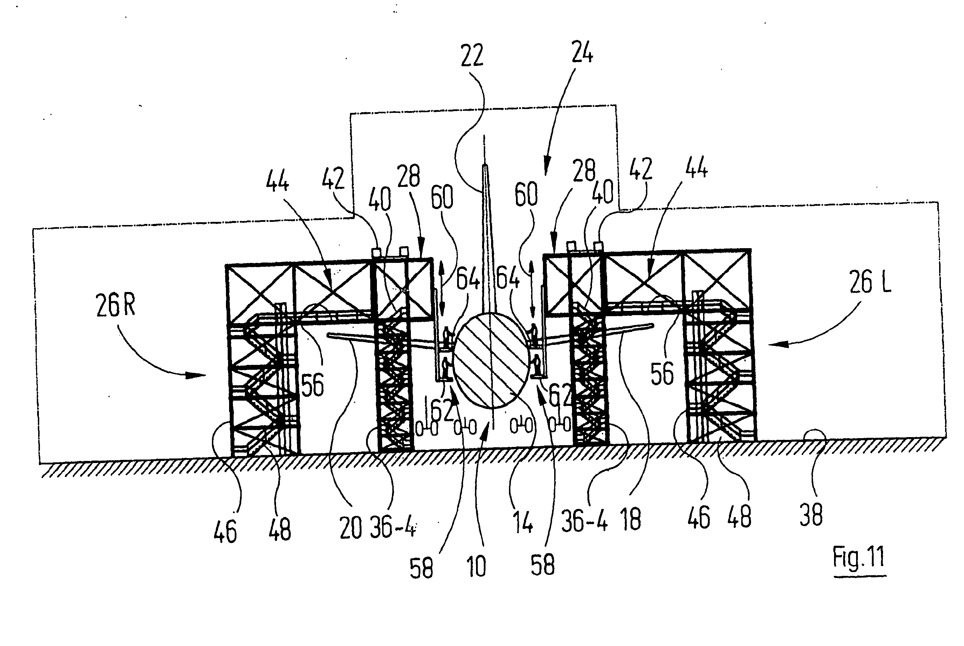

Dieses Eindocken wird nunmehr unter Bezugnahme auf die Figuren 2 bis 11 näher beschrieben.

Zunächst werden die beiden Dockeinheiten 26L und 26R weiter auseinander gestellt, als dem Durchmesser des Rumpfes 12 entspricht. Hierzu haben die Stützteile 36 und 46 bei ihren unteren Enden bei ihren Ecken vier Räder, die jeweils auf einem Schienenpaar 66-1, 66-2, 66-3, 66-4 bzw. 67 laufen.

Bei auseinander gefahrenen Dockeinheiten 26L und 26R werden dann die vorderen Stützteile 36-1 voll angehoben, so dass ihre Unterseite mit der Unterseite des zugeordneten Tragteiles 28 fluchtet. Nun kann das Flugzeug 10 mit den Leitwerken voraus an den Stützteilen 36-1 vorbeibewegt werden, wie in Figur 2 gezeigt.

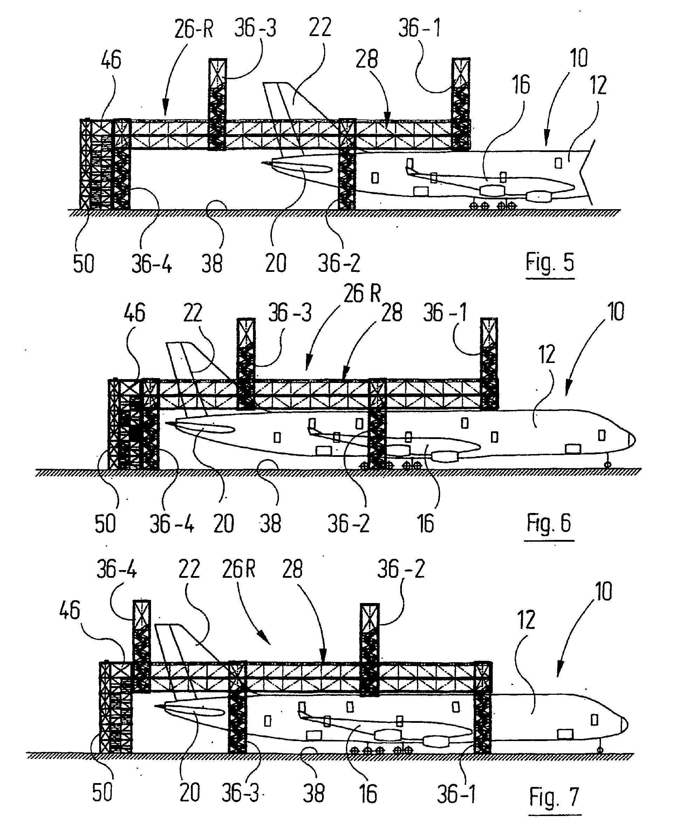

Dann werden die Stützteile 36-1 wieder zur Aufstellfläche 38 abgesenkt, und die Stützteile 36-2 werden angehoben. Nun kann das Flugzeug weiter in Eindockrichtung bewegt werden, wobei die Höhenruder 18, 20 unter den Stützteilen 36-2 vorbeilaufen. Dieser Zustand ist in Figur 4 wiedergegeben. Nun werden die Stützteile 36-2 wieder auf die Aufstellfläche 38 gestellt, und die Stützteile 36-1 und 36-3 werden angehoben. Nun können die Höhenruder 18, 20 unter den Stützteilen 36-3 passieren, während die Tragflächen 14, 16 unter den Stützteilen 36-1 vorbeibewegt werden. Diese Situation ist in Figur 6 gezeigt.

Dann werden die Stützteile 36-1 und 36-3 wieder ausgefahren und die Stützteile 36-2 und 36-4 in ihre voll angehobene Stellung bewegt. Diese Situation ist in Figur 7 wiedergegeben. Das Flugzeug kann nun weiter in der Zeichnung nach links eingedockt werden.

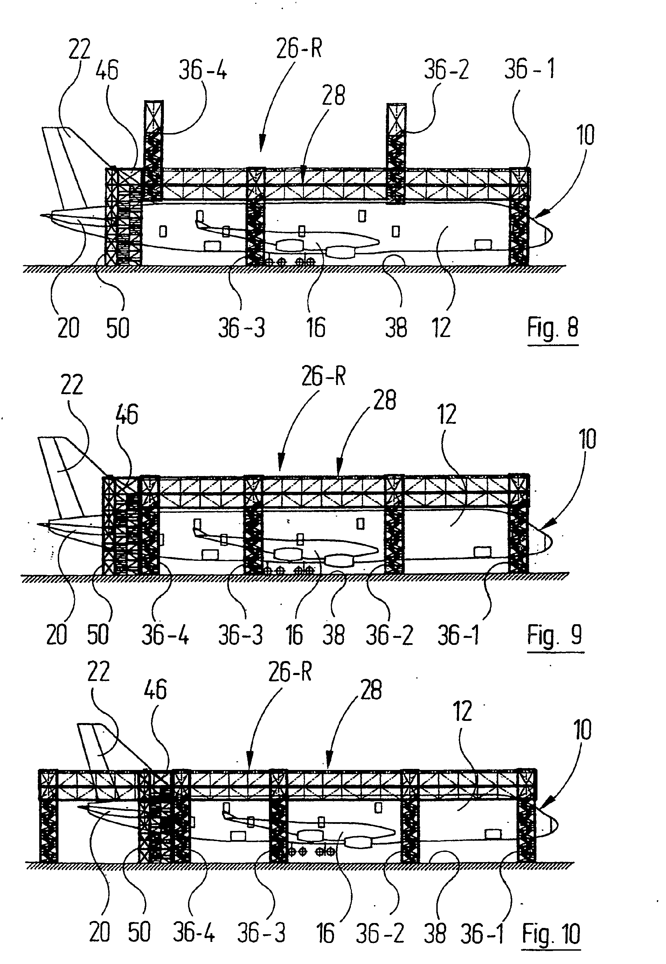

Beim Weiterbewegen des Flugzeuges in Eindockrichtung laufen die Höhenruder 18, 20 unter den Verbindungsteilen 44 und an den Stützteilen 46 vorbei, wie in Figur 8 dargestellt.

Nunmehr können die Stützteile 36-2 und 36-4 wieder auf die Aufstellfläche 38 gestellt werden, so dass man den in Figur 9 gezeigten Zustand erhält. Nun werden die beiden Dockeinheiten 26L und 26R durch Verfahren auf den Schienen 66 nahe neben den Rumpf gestellt, das Ganze derart, dass die innenliegenden Ränder der Arbeitsböden 62, 64 der Haut des Rumpfes eng benachbart sind, jedoch noch in vertikaler Richtung verstellt werden können, ohne die Haut des Rumpfes zu beschädigen.

Nun kann eine große Anzahl von Arbeitern an den verschiedenen Stellen des Flugzeuges 10 Arbeiten durchführen, wobei ein guter Zugang über die verschiedenen Treppenhäuser und Verkehrsflächen besteht.

Zum Ausdocken des Flugzeuges wird umgekehrt vorgegangen, wie oben für das Eindocken beschrieben.

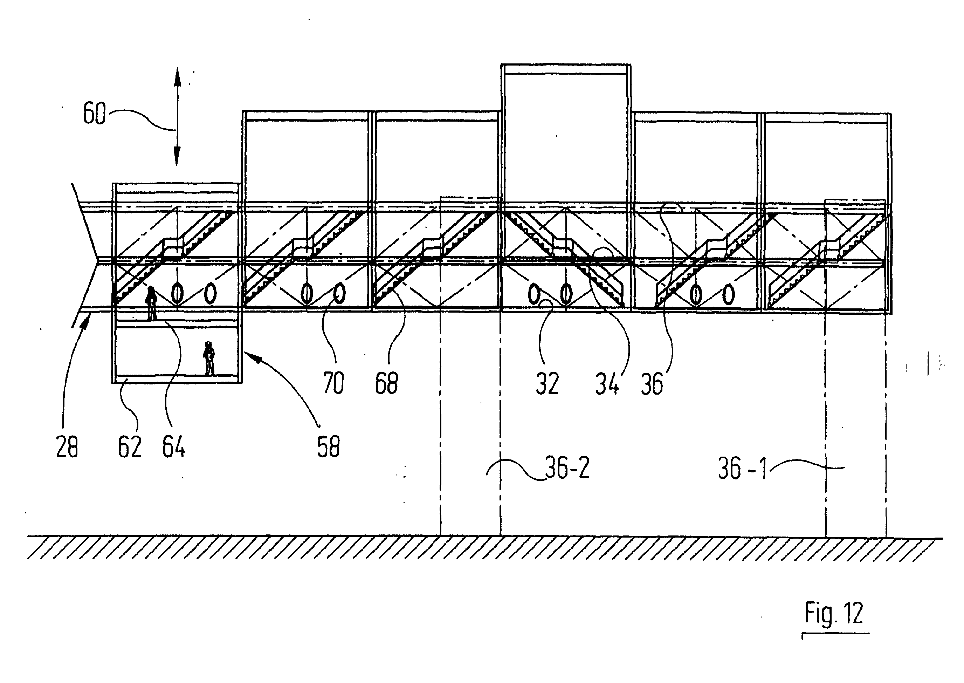

Wie in Figur 12 dargestellt, kann man in dem Tragteil 28 zusätzliche Treppen 68 vorsehen, die Verbindungen zwischen den Verkehrsflächen 30, 32 und 34 schaffen.

In Figur 12 sind ferner bei 70 Ringe von aufgeschlossenen Fluchtseilen 70 dargestellt, über welche man sich von den Verkehrsflächen in einem Notfall abseilen kann. Typischerweise liegt die Unterseite des Tragteiles 28 und damit die Verkehrsfläche 30 in einer Höhe von etwa 12 Metern über der Aufstellfläche 38, wenn das Dock zur Wartung großer interkontinentaler Passagiermaschinen bestimmt ist.

Soll in einem solchen Dock ein kleineres Flugzeug gewartet werden, so kann dies durch entsprechend hohe Aufbocktürme so weit hochgehoben werden, dass die Arbeitsböden 62, 64 wieder in geeigneter Höhe neben dem Rumpf des Flugzeuges stehen.

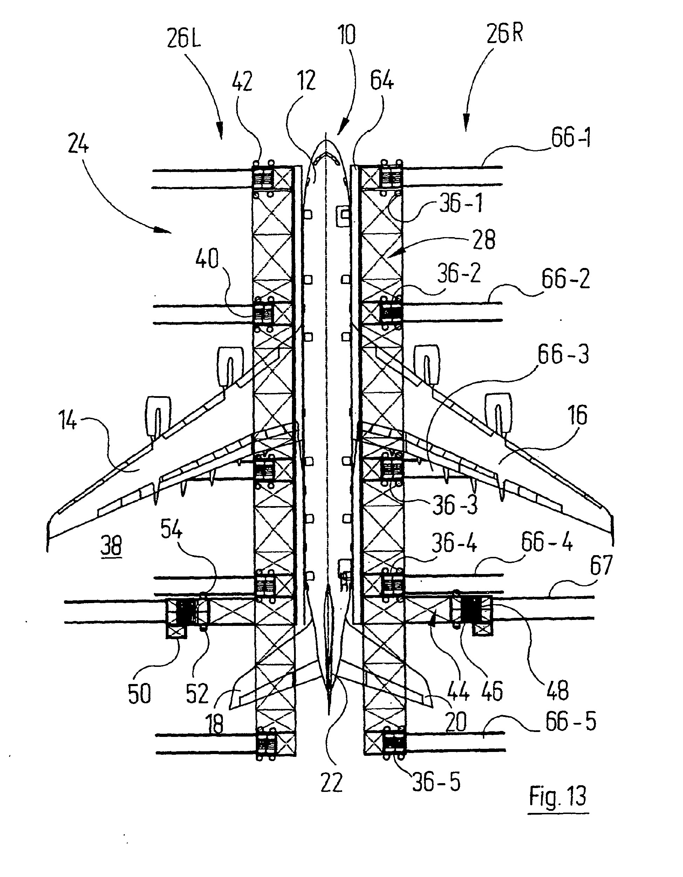

Wünscht man ein Dock, wie es oben beschrieben wurde, auch dazu zu verwenden, die Leitwerke des Flugzeuges einzugerüsten, so kann man das in Figur 1 gezeigte Dock gemäß Figur 13 nach hinten über die Stützteile 46 verlängern. Die Tragteile 28 sind dann über die Verbindungsteile 44 hinausgeführt.

Soweit eine freitragende Anordnung im Hinblick auf die gewünschte Belastbarkeit der Verkehrsflächen 30, 32, 34 nicht ausreicht, kann man die hinteren Enden der Tragteile 28 wieder durch weitere Stützteile 36-5 abstützen. Vorzugsweise werden diese wieder als vertikal verfahrbare Stützteile ausgeführt, um bei noch längeren Flugzeugen im Bedarfsfalle das Passieren der Höhenruder 18, 20 zu ermöglichen. Wo mit derartig langen Flugzeugen nicht gerechnet werden muss, kann man die hintersten Stützteile 36-5 aber auch als ständig auf der Aufstellfläche 38 auf ruhende Stützteile vorsehen.

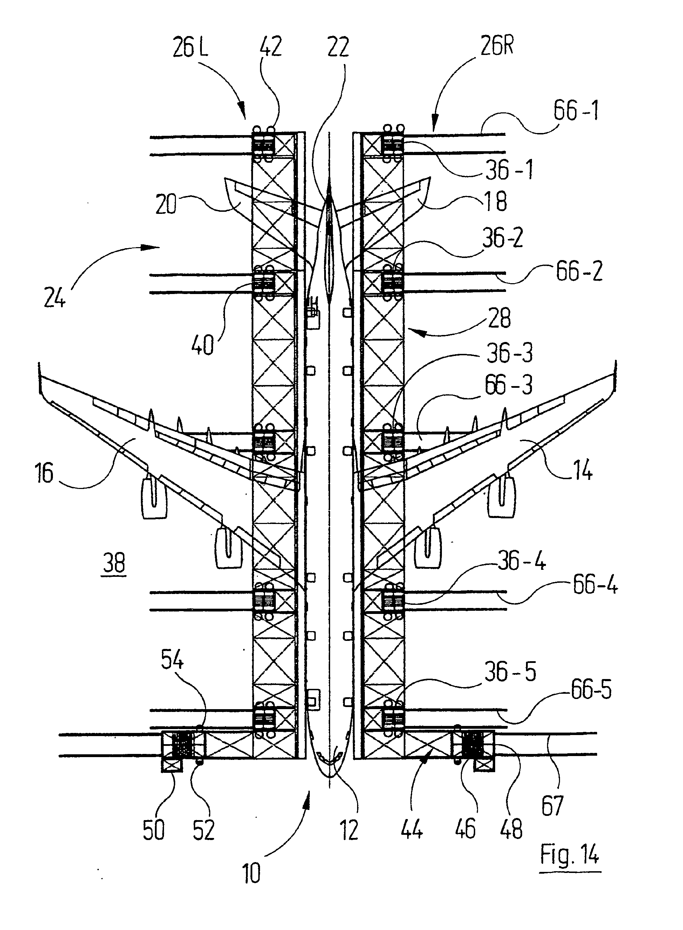

Für die hintersten Stützteile 36-5 sind in Figur 14 noch zusätzliche Schienenpaare 66-5 vorgesehen.

Das Eindocken und Ausdocken erfolgt beim Dock gemäß Figur 14 ähnlich wie oben beschrieben.

Die oben beschriebenen Docks erlauben es auch, das Flugzeug mit der Nase nach vorn einzudocken. Die entsprechende Dockposition ist bei dem abgewandelten Dock nach Figur 14 gezeigt. Dieses Dock hat gleiche Länge wie das in Figur 13 gezeigte, nur sind die von der Innenseite des Docks beabstandeten Stützteile 46, welche die äußeren Enden der Verbindungsteile 44 tragen, wieder beim inneren Ende der Dockteile vorgesehen, wie dies beim Ausführungsbeispiel nach Figur 1 der Fall war. Die Handhabung des in Figur 14 gezeigten Docks ist die gleiche wie die der vorher beschriebenen Docks.

## Patentansprüche

1. Dockeinheit zur Durchführung von Arbeiten an einem
Flugzeug (10), welches ein Höhenleitwerk (18, 20) aufweist, mit einem im Wesentlichen horizontal verlaufenden Tragteil (28), welches ein erstes Ende und ein zweites Ende aufweist und über eine Mehrzahl von Stützteilen (36) auf einer Aufstellfläche (38) ruht, von welchen Stützteilen (36) ausgehend vom ersten Ende des Tragteils (28) eines oder mehrere in vertikaler Richtung anhebbar sind, welches Tragteil mindestens einen Arbeitsboden (62, 64) trägt, wobei die Höhe der Stützteile (36) so bemessen ist, dass die Unterseite des horizontalen Tragteiles (28) höher liegt als das Höhenleitwerk (18, 20) des Flugzeuges, **dadurch gekennzeichnet, dass** beim zweiten Ende des horizontalen Tragteiles (28) ein weiteres, feststehendes Stützteil (46) vorgesehen ist, dessen Innenseite einen Abstand von der dem Rumpf des Flugzeuges zugewandten Seite des Tragteiles (28) aufweist, der größer ist als den transversale Überstand des Höhenleitwerkes (18, 20) über den Rumpf (12) des Flugzeuges (10).

2. Dockeinheit nach Anspruch 1, **dadurch gekennzeichnet,**
**dass** die Höhe der Stützteile (36) so gewählt ist, dass die Unterseite zumindest eines Abschnittes des horizontalen Tragteiles (28) höher liegt als das Höhenleitwerk (18, 20) des Flugzeuges (10), wenn dieses auf der Aufstellfläche (38) aufgebockt ist.

3. Dockeinheit nach Anspruch 1 oder 2, **dadurch gekennzeichnet, dass** zumindest eines der Stützteile (36) eine Treppe (40) aufweist.

4. Dockeinheit nach Anspruch 3, **dadurch gekennzeichnet,**
**dass** das weitere Stützteil (46) eine Treppe (48) aufweist.

5. Dockeinheit nach Anspruch 4, **dadurch gekennzeichnet,**
**dass** das weitere Stützteil (46) mit einem Aufzug (50) versehen ist.

6. Dockeinheit nach Anspruch 4 oder 5, **dadurch gekennzeichnet, dass** das weitere Stützteil (46) mit vertikalen Fluchteinrichtungen (50, 52) versehen ist.

7. Dockeinheit nach einem der Ansprüche 3 bis 6, **dadurch gekennzeichnet, dass** die vom zweiten Ende des Tragteiles (28) entfernten Stützteile (36) Treppen aufweisen und diese Treppen von der Rumpfseite der Dockeinheit (26) nach außen hin beabstandet sind, so dass auf der Innenseite des Dockteiles (26) eine über dessen gesamte Länge verlaufende Verkehrsfläche (32, 34, 36) erhalten wird.

8. Dockeinheit nach einem der Ansprüche 1 bis 7, **dadurch**
**gekennzeichnet, dass** sich das horizontale Tragteil (28) über das feststehende weitere Stützteil (46) hinaus erstreckt.

9. Dockeinheit nach Anspruch 8, **dadurch gekennzeichnet,**
**dass** der sich über das feststehende weitere Stützteil (46) hinaus erstreckende Abschnitt des horizontalen Tragteiles (28) bei seinem freien Ende über ein End-Stützteil (36-5) auf der Aufstellfläche (38) ruht.

10. Dockeinheit nach einem der Ansprüche 1 bis 9, **dadurch**
**gekennzeichnet,dass** das horizontale Tragteil (28) zwei oder mehr vertikal beabstandete Verkehrsflächen (30, 32, 34) aufweist.

11. Dockeinheit nach einem der Ansprüche 1 bis 10, **dadurch**
**gekennzeichnet, dass** das horizontale Tragteil (28) als Fachwerk ausgebildet ist.

12. Dockeinheit nach einem der Ansprüche 1 bis 11, **dadurch**
**gekennzeichnet, dass** das horizontale Tragteil (28) eine Mehrzahl von Arbeitsböden (62, 64) trägt, die in der Höhe verstellbar (60) sind.

13. Dockeinheit nach Anspruch 12, **dadurch gekennzeichnet,**
**dass** mehrere übereinander liegende Arbeitsböden (62, 64) jeweils von einem gemeinsamen Vertikalschlitten (58) getragen sind und der vertikale Abstand der Arbeitsböden (62, 64) dem vertikalen Abstand von Verkehrsflächen (30, 32, 34) des horizontalen Tragteiles (28) entspricht oder einem ganzzahligen Teil dieses vertikalen Abstandes entspricht.

14. Dockeinheit nach einem der Ansprüche 1 bis 13, **dadurch**
**gekennzeichnet, dass** mindestens eines der Stützteile (36) in Längsrichtung des Tragteiles (26) verschiebbar ist.

15. Dockeinheit nach einem der Ansprüche 1 bis 14, **dadurch**
**gekennzeichnet, dass** die Stützteile (36) Fahrmittel aufweisen, mittels derer sie auf der Aufstellfläche (38) verschiebbar sind.

16. Dockeinheit nach Anspruch 15, **dadurch gekennzeichnet,**
**dass** die Fahrmittel Räder umfassen und auf Schienen (66, 67) laufen, die in der Aufstellfläche (38) vorgesehen sind.

17. Dockeinheit nach einem der Ansprüche 1 bis 16, **gekennzeichnet durch** eine spiegelbildlich zu ihr ausgebildete und spiegelbildlich zu ihr angeordnete zweite Dockeinheit (26L, 26R).

## Claims

1. A dock unit for carrying out works on an aircraft (10) which has a horizontal tail unit (18, 20), comprising an essentially horizontally extending carrying member (28) having a first end and a second end and resting on an erection surface (38) by means of a plurality of support members (36), one or a plurality of said support members (36) being arranged under increasing distance from the first end of the carrying member (28) being movable in vertical direction, said carrying member (28) carrying at least one platform (62, 64), wherein the height of the support members (36) is such that the lower side of the horizontal carrying member (28) is at a higher level than the horizontal tail unit (18, 20) of the aircraft, **characterized in that** a further stationary support member (46) is provided near the second end of the horizontal carrying member (28), the inward side of the support member (46) being spaced from the side of the carrying member (28) facing the fuselage of the aircraft by a distance which is greater than the transverse projection of the horizontal tail unit (28, 20) beyond the fuselage (12) of the aircraft (10).

2. The dock unit as in claim 1, **characterized in that** the height of the support members (36) is chosen such that the lower side of at least a portion of the horizontal carrying member (28) is higher than the horizontal tail unit (18, 20) of the aircraft (10), the aircraft being jacked-up above the erection surface (38).

3. The dock unit as in claim 1 or 2, **characterized in that** at least one of the support members (36) comprises a staircase (40).

4. The dock unit as in claim 3, **characterized in that** the further support member (46) comprises a staircase (48).

5. The dock unit as in claim 4, **characterized in that** the further support member (46) is provided with an elevator (50).

6. The dock unit as in claim 4 or 5, **characterized in that** the further support member (46) is provided with vertical escape means (50, 52).

7. The dock unit as in one of claims 3 to 6, **characterized in that** the support members (36) being spaced from the second end of the carrying member (28) comprise stairs and that these stairs are spaced from the fuselage side of the dock unit (26) in outward direction such that a traffic area (32, 34, 36) is obtained extending along the laterally interior side of the dock unit (26) along the entire length thereof.

8. The dock unit as in one of claims 1 to 7, **characterized in that** the horizontal carrying member (28) extends beyond the stationary further support member (46).

9. The dock unit as in claim 8, **characterized in that** the portion of the horizontal carrying member (28) extending beyond the further support member (46) at the free end thereof is supported from the erection surface (38) by means of a terminal support member (36-5).

10. The dock unit as in one of claims 1 to 9, **characterized in that** the horizontal carrying member (28) comprises two or more vertically spaced traffic areas (30, 32, 34).

11. The dock unit as in one of claims 1 to 10, **characterized in that** the horizontal carrying member (28) is formed as a framework or lattice strut structure.

12. The dock unit as in one of claims 1 to 11, **characterized in that** the horizontal carrying member (28) carries a plurality of platforms (62, 64) which are adjustable (60) in height.

13. The dock unit as in claim 12, **characterized in that** a plurality of super-imposed platforms (62, 64) is carried by a common vertical carriage (58) and that the vertical distance between the platforms (62, 64) corresponds to the vertical distance between the traffic areas (30, 32, 34) of the horizontal carrying member (28) or correspond to an integral multiple of this vertical distance.

14. The dock unit as in one of claims 1 to 13, **characterized in that** at least one of the support members (36) is adjustable in longitudinal direction of the carrying member (28).

15. The dock unit as in one of claims 1 to 14, **characterized in that** the support members (36) comprise moving means for movement along the erection surface (38).

16. The dock unit as in claim 15, **characterized in that** the moving means comprise wheels running on rails (66, 67) arranged in the erecting surface (38).

17. The dock unit as in one of claims 1 to 16, **characterized by** a mirror image second dock unit (26L, 26R) arranged under mirror image conditions.

## Revendications

1. Ensemble dock pour l'exécution de travaux sur un avion (10) doté d'un empennage d'altitude (18, 20), comprenant une partie de support (28) qui s'étend pour l'essentiel horizontalement, comporte une première extrémité et une seconde extrémité, et repose sur une surface de contact (38) par l'intermédiaire d'une pluralité de pièces d'appui (36), pièces d'appui (36) parmi lesquelles l'une ou plusieurs peu(ven)t être soulevée(s) dans le sens vertical à partir de la première extrémité de la partie de support (28), laquelle partie de support porte au moins un plancher d'intervention (62, 64), sachant que la hauteur des pièces d'appui (36) est dimensionnée de telle sorte que la face inférieure de la partie horizontale de support (28) soit située plus haut que l'empennage d'altitude (18, 20) de l'avion, **caractérisé par** la présence, au niveau de la seconde extrémité de la partie horizontale de support (28), d'une pièce fixe d'appui (46) supplémentaire dont la face intérieure présente, vis-à-vis du côté de ladite partie de support (28) qui est tourné vers le fuselage de l'avion, une distance plus grande que le débord transversal dudit empennage d'altitude (18, 20) au-delà dudit fuselage (12) de l'avion (10).

2. Ensemble dock selon la revendication 1, **caractérisé par le fait que** la hauteur des pièces d'appui (36) est choisie de façon telle que la face inférieure d'au moins un tronçon de la partie horizontale de support (28) soit située plus haut que l'empennage d'altitude (18, 20) de l'avion (10) lorsque celui-ci est levé par cric sur la surface de contact (38).

3. Ensemble dock selon la revendication 1 ou 2, **caractérisé par le fait qu'**au moins l'une des pièces d'appui (36) présente un escalier (40).

4. Ensemble dock selon la revendication 3, **caractérisé par le fait que** la pièce supplémentaire d'appui (46) présente un escalier (48).

5. Ensemble dock selon la revendication 4, **caractérisé par le fait que** la pièce supplémentaire d'appui (46) est équipée d'un ascenseur (50).

6. Ensemble dock selon la revendication 4 ou 5, **caractérisé par le fait que** la pièce supplémentaire d'appui (46) est pourvue de dispositifs verticaux d'alignement (50, 52).

7. Ensemble dock selon l'une des revendications 3 à 6, **caractérisé par le fait que** les pièces d'appui (36), éloignées de la seconde extrémité de la partie de support (28), comportent des escaliers, ces escaliers étant espacés, vers l'extérieur, du côté dudit ensemble dock (26) situé dans la zone du fuselage, ce qui procure, sur la face intérieure dudit ensemble dock (26), une surface de circulation (32, 34, 36) s'étendant sur toute la longueur dudit ensemble.

8. Ensemble dock selon l'une des revendications 1 à 7, **caractérisé par le fait que** la partie horizontale de support (28) s'étend au-delà de la pièce fixe d'appui (46) supplémentaire.

9. Ensemble dock selon la revendication 8, **caractérisé par le fait que** le tronçon de la partie horizontale de support (28), qui fait saillie au-delà de la pièce fixe d'appui (46) supplémentaire, repose sur la surface de contact (38) au niveau de son extrémité libre, par l'intermédiaire d'une pièce extrême d'appui (36-5).

10. Ensemble dock selon l'une des revendications 1 à 9, **caractérisé par le fait que** la partie horizontale de support (28) comporte des surfaces de circulation (30, 32, 34) espacées verticalement, au nombre de deux ou plus.

11. Ensemble dock selon l'une des revendications 1 à 10, **caractérisé par le fait que** la partie horizontale de support (28) est réalisée sous la forme d'une structure en treillis.

12. Ensemble dock selon l'une des revendications 1 à 11, **caractérisé par le fait que** la partie horizontale de support (28) porte une pluralité de planchers d'intervention (62, 64) pouvant être réglés (60) en hauteur.

13. Ensemble dock selon la revendication 12, **caractérisé par le fait que** plusieurs planchers d'intervention (62, 64), agencés en superposition, sont respectivement portés par un chariot vertical commun (58) ; et la distance verticale séparant lesdits planchers d'intervention (62, 64) correspond à la distance verticale séparant des surfaces de circulation (30, 32, 34) de la partie horizontale de support (28), ou bien correspond à un entier de cette distance verticale.

14. Ensemble dock selon l'une des revendications 1 à 13, **caractérisé par le fait qu'**au moins l'une des pièces d'appui (36) peut coulisser dans le sens longitudinal de la partie de support (28).

15. Ensemble dock selon l'une des revendications 1 à 14, **caractérisé par le fait que** les pièces d'appui (36) présentent des moyens de déplacement à l'aide desquels elles peuvent coulisser sur la surface de contact (3 8).

16. Ensemble dock selon la revendication 15, **caractérisé par le fait que** les moyens de déplacement englobent des roues, et se meuvent sur des rails (66, 67) prévus dans la surface de contact (38).

17. Ensemble dock selon l'une des revendications 1 à 16, **caractérisé par** un second ensemble dock (26L, 26R) de réalisation spéculaire et de disposition spéculaire vis-à-vis dudit ensemble.
